Europäisches Patentamt

European Patent Office

Office européen des brevets

(11) Publication number: **0 386 776**
**A1**

(12) **EUROPEAN PATENT APPLICATION**

(21) Application number: 90104512.0

(51) Int. Cl.5: **B62D 7/14, B60G 15/07**

(22) Date of filing: 09.03.90

(30) Priority: 10.03.89 JP 58142/89
21.04.89 JP 101998/89

(43) Date of publication of application:
**12.09.90 Bulletin 90/37**

(84) Designated Contracting States:
**DE FR GB**

(71) Applicant: **Mazda Motor Corporation
No. 3-1, Shinchi Fuchu-cho
Aki-gun Hiroshima-ken(JP)**

(72) Inventor: **Edahiro, Takeshi
c/o Mazda Motor Corp., 3-1 Shinchi,
Fuchu-cho
Aki-gun, Hiroshima-ken(JP)**
Inventor: **Kanazawa, Hirotaka
c/o Mazda Motor Corp., 3-1 Shinchi,
Fuchu-cho
Aki-gun, Hiroshima-ken(JP)**

(74) Representative: **Melzer, Wolfgang, Dipl.-Ing. et
al
Patentanwälte Mitscherlich, Gunschmann,
Körber, Schmidt-Evers, Melzer,Schulz
Steinsdorfstrasse 10
D-8000 München 22(DE)**

(54) **Rear-wheel suspension apparatus for a rear wheel steering vehicle.**

(57) A coil spring (62L, 62R) as a suspension spring is interposed between a vehicle body (61) and a knuckle arm (10L, 10R) holding left-hand and right-hand rear wheels (2L, 2R) rotatably, respectively. The left-hand and right-hand arms (10L, 10R) are connected to each other through a rear-wheel steering mechanism (12, 21) to which is connected a spring (17) for urging the left-hand and right-hand wheels (2L, 2R) to be retained in neutral position. The rear wheels are steered in resistance to the urging force of the spring (17) by driving the rear-wheel steering mechanism (12, 21) with a motor (20) or the like. In order to prevent the revolving torque of the coil spring (62L, 62R) from being transferred to the knuckle arms (10L, 10R), a revolving torque absorbing member such as a bearing (81) or a ball joint (88) is interposed, for example, between the coil spring (62L, 62R) and the vehicle body (61) or between the coil spring (62L, 62R) and the knuckle arm (10L, 10R).

**FIG.1**

# REAR-WHEEL SUSPENSION APPARATUS FOR A REAR-WHEEL STEERING VEHICLE

## BACKGROUND OF THE INVENTION

### 1. Field of the Invention

The present invention relates to a rear-wheel suspension apparatus for a rear-wheel steering vehicle.

### 2. Description of Related Art

There are vehicles of a so-called "four-wheel steering (4WS) type, in which both front wheels and rear wheels are steered. For the four-wheel steering, a steering mechanism for the rear wheels may roughly be broken down into the steering mechanism of a mechanical type, in which a front-wheel steering mechanism is mechanically coupled to the rear-wheel steering mechanism, and that of an electric type, in which the rear-wheel steering mechanism is associated with an electromagnetic drive means such as an electrically-driven motor and the rear wheels are steered by a driving force of the drive means, as disclosed in U. S. Patent No. 4,645,025. For the steering mechanism of the electric type, interposition of a deceleration mechanism between the drive means and the rear-wheel steering mechanism is proposed in order to make a capacity of the drive means to the smallest possible extent.

For the steering mechanism of the electric type, the rear wheel steering is controlled exclusively by electric means, so that a sufficient extent of measures on fail safe upon a failure of this control system or the like should be taken into account. From this point of view, it has been proposed that the rear-wheel steering mechanism be provided with a neutral-position retaining means for always urging the rer-wheel steering mechanism toward neutral position, as disclosed in U. S. Patent No. 4,732,231. This proposal is made on the basis of the idea that the rear wheels are forced to be returned to their neutral positions by the neutral-position retaining means by suspending the rear wheel steering upon occurrence of a failure in the control system.

On the other hand, a rear-wheel suspension unit has a rear-wheel supporting member for holding the rear wheels rotatably, the rear-wheel supporting member for the left-hand rear wheel being connected to the rear-wheel supporting member for the right-hand rear wheel through the rear-wheel steering mechanism. As a suspension spring, there has generally been used a coil spring, and the suspension spring is interposed mainly between the vehicle body and the rear-wheel supporting member.

It is to be noted herein that demands have strongly been made to minimize the driving force of a driving means for steering the rear wheels from the point of view that the driving means be minituarized, energy be saved and so on. Therefore, minimization of the urging force for retaining the rear wheels in the neutral position is significant from the above demands, too. As a result of extensive studies on the setting of the urging force to the smallest possible extent with the above circumstance taken into account, it has been found that, even if no problem of retaining the rear wheels in the neutral position is caused at all upon cornering in one direction, for example, to the right, the neutral position may not be retained upon cornering in the other direction, for example, to the left. In other words, the urging force for retaining the rear wheels in the neutral position should be set so as to allow the rear wheels to retain their neutral positions even at the time of cornering with a limit placed upon the vehicle, namely, at the time when the maximum transverse acceleration is being accelerated. Therefore, a minimum setting value during cornering to the right may differ from that during cornering to the left.

It has now been found that this occurs from the influence of a coil spring used as the suspension spring. In other words, it is in general that the same coil springs to be used as the suspension springs, namely, the right-wound coil springs, are used both for the rear-wheel steering mechanisms for the left-hand and right-hand rear wheels. The coil springs are compressed more or less by a load from the weight of the body, and the revolving torque generated by this compression acts upon the spring seats for the coil springs. This torque may give a revolving moment so as to steer the rear-wheel supporting members and, eventually, the rear wheels to a predetermined direction.

This revolving moment acts upon the coil springs so as to steer the left-hand and right-hand rear wheels in the same directions when the coil springs used are the same, namely, when the coil springs are wound in the same directions.

As will be understood from the foregoing, it should be noted that this revolving torque generated by the coild springs appears as a difference between a force required for steering the rear wheels to the right and a force required for steering the rear wheels to the left and that this may exert an influence upon setting the urging force of the neutral-position retaining means.

It is to be noted as a matter of course that the rear wheels can be retained in the neutral position in both cases when they are corned to the left and to the right if the urging force of the neutral-position retaining means is made larger by the increment corresponding to the revolving torque of the coil springs. In this case, this leads to an increase in the urging force of the neutral-position retaining means so that this is not preferred.

## SUMMARY OF THE INVENTION

Therefore, the present invention has the object to provide a rear-wheel suspension apparatus for a rear-wheel steering vehicle adapted to exclude an influence from a suspension spring consisting of a coil spring, thereby minimizing an urging force of the neutral-position retaining means to the smallest possible extent.

In order to achieve the above object, the present invention consists of a rear-wheel suspension apparatus for a rear-wheel steering vehicle, comprising:

a suspension spring comprising a coil spring, interposed between a vehicle body and a rear-wheel supporting member supporting left-hand and right-hand rear wheels rotatably, respectively;

a rear-wheel steering mechanism disposed to connect the rear-wheel supporting member for the left-hand rear wheel to the rear-wheel supporting member for the right-hand rear wheel;

a neutral-position retaining means for urging the left-hand and right-hand rear wheels so as to be retained in neutral position, which is connected to the rear-wheel steering mechanism;

a driving means for displacing the rear-wheel steering mechanism in resistance to an urging force of the neutral-position retaining means; and

a revolving torque absorbing means for preventing a revolving torque of the suspension spring from being transmitted to the rear-wheel supporting member.

The above arrangement enables the revolving torque absorbing means to exclude an action of the revolving torque caused by the suspension spring consisting of the coil spring upon the rear-wheel supporting member, whereby no revolving torque from the coil spring can exert any influence upon the steering of the rear wheels in both directions. As a result, the urging force of the neutral-position retaining means can be made smaller by an amount that exceeds the revolving torque.

The revolving absorbing means may be constructed, for example, such that a bearing is interdisposed by the spring seats on one end side of the coil spring.

Other objects, features and advantages of the present invention will become apparent in the course of the description of the preferred embodiments which follows, with reference to the accomapnying drawings.

## BRIEF DESCRIPTION OF THE DRAWINGS

FIG. 1 is a diagrammatical representation of a total system according to an example of the present invention.

FIG. 2 represents a schematic construction of the rear-wheel steering mechanism.

FIG. 3 is an enlarged sectional view of the neutral-position retaining means.

FIG. 4 is a diagram representing a control characteristic of a type sensitive to the vehicle speed according to an example for rear wheel steering.

FIG. 5 is a diagram representing characteristics showing a variation in steered angles of the rear wheel in accordance with the vehicle speed.

FIG. 6 is a partially sectional view showing an example of the rear-wheel suspension apparatus in which the revolving torque absorbing means is incorporated.

FIG. 7 is a secional view with the essential portion of FIG. 6 enlarged.

FIGS. 8 to 15 are partially sectional views of variants showing essential portions of the revolving torque absorbing means.

FIG. 16 is a flow chart showing control example of the rear wheel steering.

FIG. 17 is a view in section showing a preferred example in which the rear-wheel suspension mechanism according to the present invention is used, too, for the rear-wheel suspension mechanism for the vehicle wherein no rear wheel steering is implemented, which corresponds to the view of FIG. 7.

## DESCRIPTION OF THE PREFERRED EMBODIMENTS

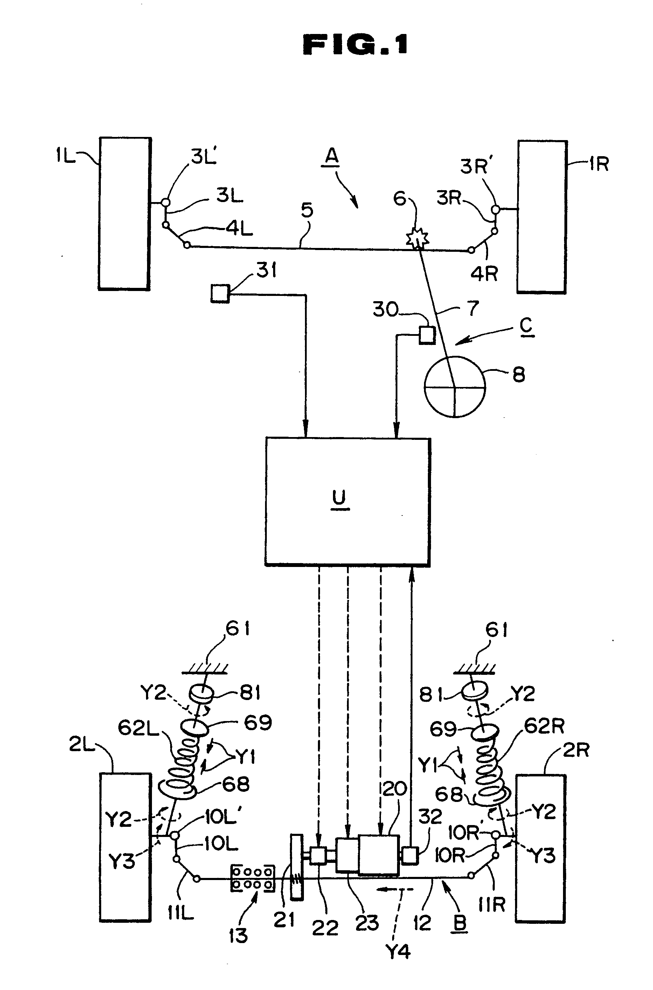

As shown in FIG. 1, a vehicle as an automobile has a right-hand front wheel 1R, a left-hand front wheel 1L, a right-hand rear wheel 2R and a left-hand rear wheel 2L. The right-hand and left-hand front wheels 1R and 1L are connected to each other by a front-wheel steering mechanism A, and the right-hand and left-hand rear wheels 2R and 2L are connected to each other by a rear-wheel steering mechanism B, respectively.

In this embodiment, the front-wheel steering mechanism A comprises pairs of left-hand and right-hand knuckle arms 3L, 3R and left-hand and right-hand tie rods 4R, 4L, and a relay rod 5 interconnecting the left-hand tie rod 3L to the right-hand tie rod 3R. To the front-wheel steering mechanism A is connected a steering mechanism C which is of a rack-and-pinion type in which a pinion 6 is interconnected through a shaft 7 to a steering wheel 8. This arrangement allows the relay rod 5 to be displaced toward the left in FIG. 1 when the steering wheel 8 is steered to the right, thereby pivotting the knuckle arms 3R and 3L about their pivotal centers 3R$'$ and 3L$'$ in the clockwise direction in FIG. 1, in proportion to a displacement amount of the steering wheel 8 displaced, namely, a steered angle of the steering wheel and steering the left-hand and right-hand front wheels 1L and 1R to the right, respectively. Likewise, when the steering wheel 8 is steered to the left, the left-hand and right-hand front wheels 1L and 1R are steered to the left in proportion to a displacement of the steering wheel.

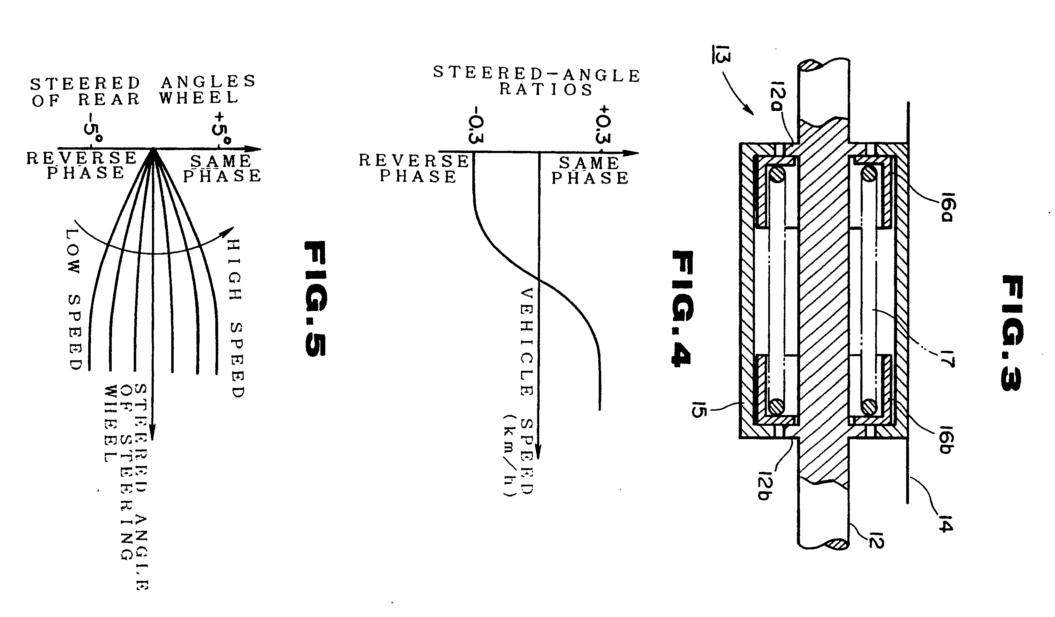

Like the front-wheel steering mechanism A, the rear-wheel steering mechanism B comprises pairs of left-hand and right-hand knuckle arms 10L, 10R, left-hand and right-hand tie rods 11L, 11R, and a relay rod 12 interconnecting the left-hand tie rod 11L to the right-hand tie rod 11R. The relay rod 12 is provided with a neutral-position retaining means 13 which, as shown in FIG. 3, has a casing 15 fixed to the vehicle body 14, a pair of movable left-hand and right-hand spring seats 16a, 16b, and a compression spring 17 consisting of a coil spring, in which the movable left-hand and right-hand spring seats 16a and 16b are disposed so as to be displaceable in left and right directions, and the compression spring 17 is interposed between the movable left-hand and right-hand spring seats 16a and 16b, respectively. The relay rod 12 extends in the longitudinal direction and passes through the compression spring 17 and the casing 15. The relay rod 12 is provided with a pair of left-hand and right-hand flange sections 12a and 12b, respectively, in a spaced relationship so as to allow an abutment with the movable left-hand spring seat 16a and the movable right-hand spring seat 16b. The position in which the movable spring seats 16a and 16b are abutted with the left-hand and right-hand inner ends of the casing 15, as shown in FIG. 3, is a neutral position of the rear wheels. And the relay rod 12 is always urged toward the neutral position by means of the compression spring 17 which should have a spring force large enough to compete with or overcome a side force during cornering.

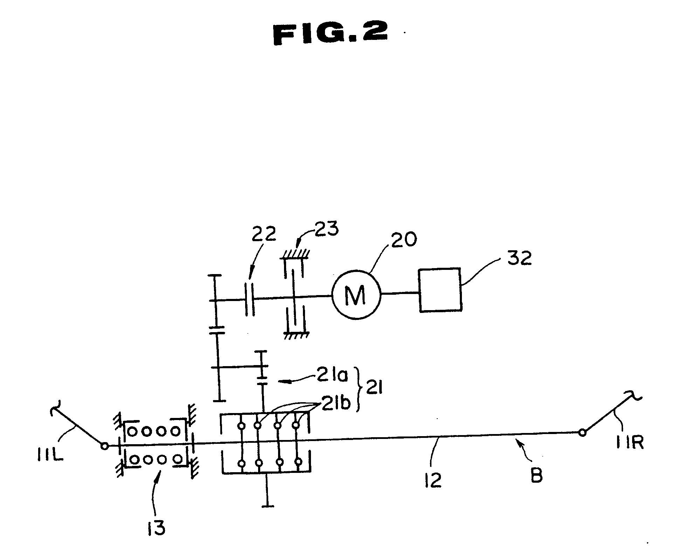

The rear-wheel steering mechanism B is interconnected to a servomotor 20 as a drive source for steering the rear wheels 2R and 2L. More specifically, as shown in FIG. 2, an interconnection mechanism of the relay rod 12 to the servomotor 20 is provided with a deceleration mechanism containing a geartrain 21a and a ball spring 21b, a clutch 22, and a brake mechanism 23. These elements and mechanisms are disposed in order from the side of the relay rod 12. This arrangement allows the clutch 22 to mechanically uncouple interconnection of the servomotor 20 to the rear-wheel steering mechanism B, and the brake mechanism 23 grips an output shaft of the servomotor 20, thereby enabling the rotation of the output shaft to be locked.

With the arrangement as described hereinabove, when the clutch 22 is in a coupled state, on the one hand, the relay rod 12 is displaced toward the left or the right in FIG. 1 by rotating the servomotor 20 in a normal direction or in a reverse direction and, as a result, the knuckle arms 10R and 10L are steered about their respective pivotal centers 10R$'$ and 10L$'$ in the clockwise or counterclockwise direction in the drawing in proportion to an amount of revolution of the servomotor. When the clutch 22 is in an uncoupled state, on the other hand, the rear wheels 2R and 2L are forced to return to a neutral position by the neutral-position retaining means 13 and retained in the neutral position. In other words, when the clutch 22 is uncoupled, the vehicle becomes of a so-called 2WS (two-wheels-steering) type, in which only the front wheels 1R and 1L are steered.

Rear-wheel steering control is of a type sensitive to a vehicle speed in this embodiment. One example of altering a steered-angle ratio in accordance with the vehicle speed is represented in FIG. 4. When the control characteristic (steering characteristic) as shown in FIG. 4 is given, the steered angle of the rear wheels with respect to the steered angle of the steering wheel alters in the same phase direction to a larger extent as the vehicle speed gets faster, as shown in FIG. 5. In order to implement control in such a fashion as described hereinabove, a control unit U is provided such that signals are inputted from a sensor 30 for sensing a steered angle of the steering wheel, a vehicle speed sensor 31 and an encorder 32 for detecting a position of revolution of the servomotor 20. The control unit U operates a target rear-wheel steered angle on the basis of the steered angle of the steering wheel and the vehicle speed and generates a control signal corresponding to a rear-wheel steering amount required to the servomotor 20. The rear wheels 2R and 2L are steered while an appropriate operation of the servomotor 20 is always monitored by the encorder 32, namely, under feedback control.

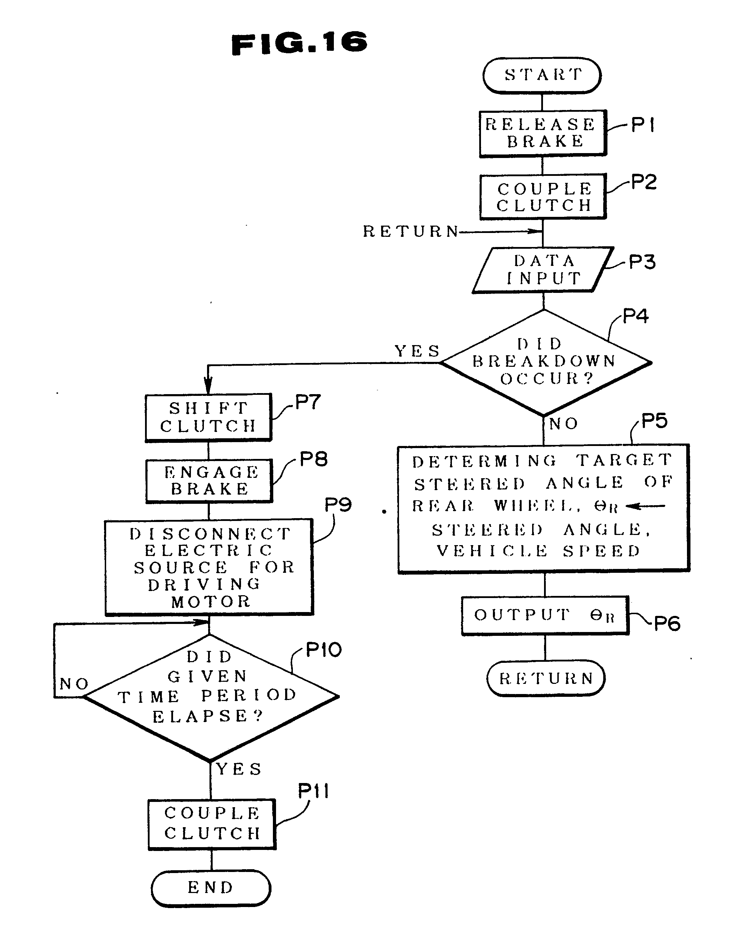

An example of the rear-wheel steering control will be described in detail with reference to the flow chart of FIG. 16.

As an ignition switch is turned on, the system is started. Then at step P1, a brake 23 is released and, at step P2, a clutch 22 is coupled. At step P3, signals from the sensors 30, 31, and 32 are read.

Then at step P4, it is judged whether a breakdown has occurred, namely, for example, whether a breakdown has occurred to such an extent that a normal drive control of the servomotor 20 could not be implemented. If it is decided that such a breakdown would not have occurred, on the one hand, a target steered angle θ R is determined by referring the vehicle speed and the steered angle of the steering wheelto the steered-angle ratio characteristic as shown in FIG. 4 (FIG. 5). Thereafter, the target steered angle θ R is generated (feedback control) at step P6.

If it is decided at step P4 that such a breakdown have occurred, on the other hand, the clutch 22 is uncoupled at step P7, thereby causing the neutral-position retaining means 13 to locate the rear wheels in the neutral position. Then at step P8, the brake 23 is engaged and, at step P9, an electric source to the servomotor 20 is disconnected. Thereafter, at step P10, it is confirmed that a predetermined time period has elapsed, and at step P11, the clutch 22 is coupled. It is to be noted herein that the process at step P10 is to wait for an ensured return of the rear wheels to the neutral position by uncoupling the clutch 22 at step P7 while the process at step P11 is to retain the neutral position of the rear wheels using the brake 23, too, by coupling the clutch 22.

Turning back to FIG. 1, a right-hand suspension spring 62R consisting of a coil spring is interposed between the right-hand knuckle arm 10R as a rear-wheel supporting member and the vehicle body 61, while a left-hand suspension spring 62L consisting of a coil spring is interposed between the left-hand knuckle arm 10L as another rear-wheel supporting member and the vehicle body 61. The coil springs for the suspension springs 62R and 62L are the same and the coils are wound in the same direction.

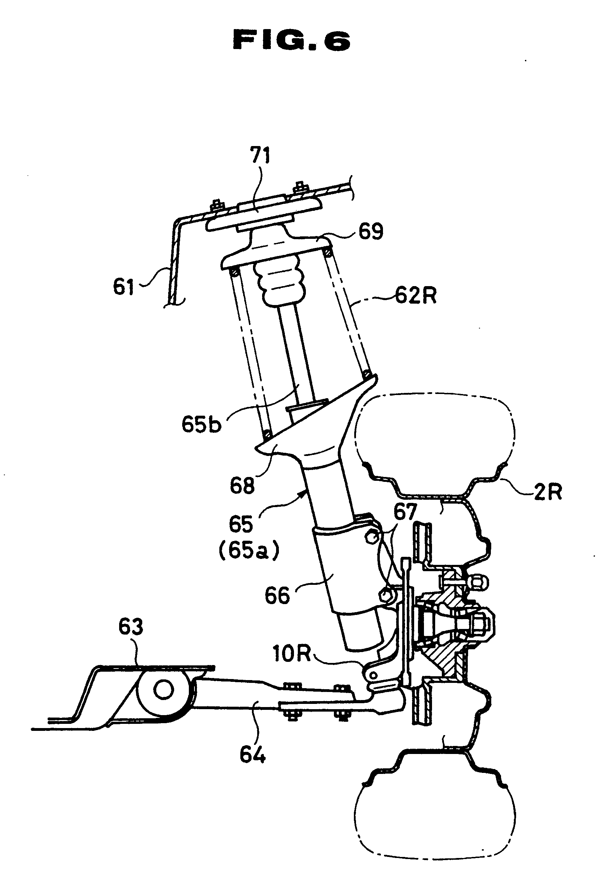

FIG. 6 represents a detail of the suspension mechanism for the right-hand rear wheel 2R. As shown in FIG. 6, reference numeral 63 denotes a sub-frame fixed to the vehicle body 61, and the sub-frame 63 pivotably supports a lower arm 64, an end portion of which, in turn, is mounted to a lower end portion of the knuckle arm 10R as the rear-wheel supporting member. To an upper end portion of the knuckle arm 10R is secured, with a bolt 67, a lower end portion of a suspension damper 65, namely, a cylinder 65a, through a mounting bracket 66. A piston rod 65b of the suspension damper 65 is mounted to a suspension tower of the vehicle body 61 as will be described hereinafter.

To the cylinder 65a of the suspension damper 65 is fixed a lower spring seat 68, while an upper spring seat 69 is fixed to the piston rod 65b. Between the lower and upper spring seats is interposed a suspension spring 62R consisting of a coil spring.

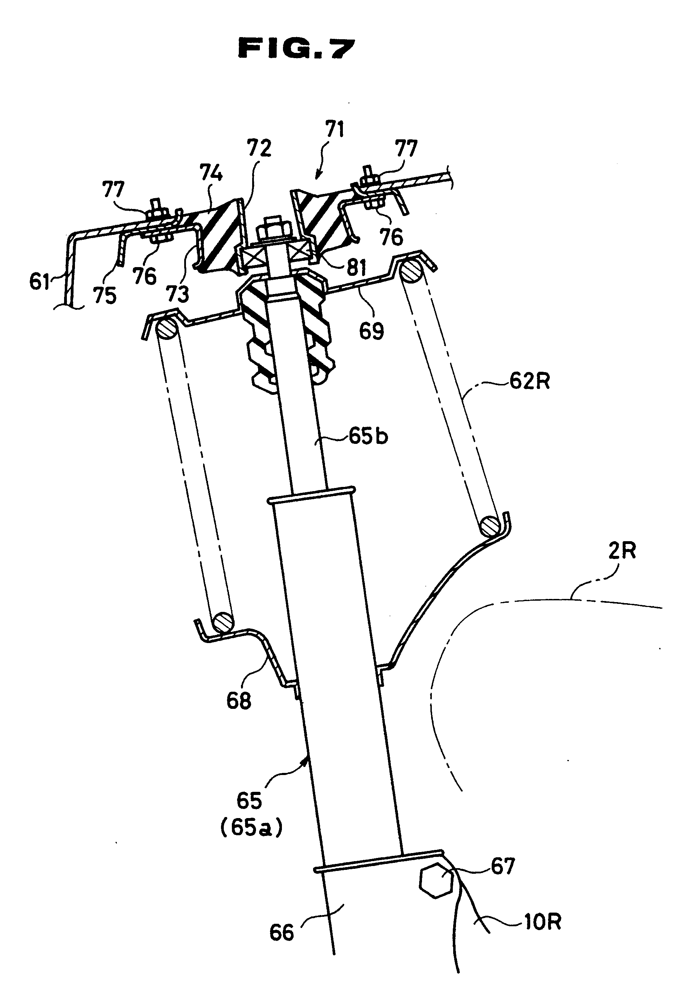

Mounting of the piston rod 65b to the vehicle body 61 is implemented through a mounting member 71 in a fashion as shown in FIG. 7. The mounting member 71 has an inner ring 72, an outer ring 73, an elastic member 74 interconnecting the inner ring 72 to the outer ring 73, and a mounting flange 75 welded to the outer ring 73. Then the mounting flange 75 is fixed to the vehicle body 61 using a bolt 76 and a nut 77.

The inner ring 72 holds a bearing 81 as a revolving torque absorbing means and the piston rod 65b is fixed to the bearing 81, whereby the piston rod 65b is mounted to the inner ring 72, namely, to the vehicle body 61, in such a state that the piston rod is allowed to be rotated about its axis.

The arrangement as described hereinabove permits a generation of a revolving torque upon a relative rotation between an upper end side and a lower end side of the right-hand suspension spring 62R due to compression by means of the weight of the vehicle body. It is to be noted, however, that the revolving torque is offset by a movement of the piston rod 65b relative to the cylinder 65a, thereby preventing the revolving torque from acting upon the knuckle arm 10R.

Influence of the revolving torque will be described in more detail with reference to FIGS. 1 and 7. The coil springs 62R and 62L are compressed in the arrows Y1 in FIG. 1 by a load from a sprang weight, thereby resulting in the likelihood to cause a torsion. The coil springs 62R and 62L, however, are blocked from rotating with respect to the spring seats 68 and 69, so that the torsion is prevented, leading to a generation of revolving torque between the sprang weight and unsprung weight. This revolving torque is directed to the same directions as shown by the arrows Y2 in FIG. 1 because the coils of the coil springs 62R and 62L are wound in the same direction (in this embodiment, in the right direction). In this case, with the fact taken into account that the bearing 81 is not located as shown in FIG. 7, namely, that the piston rod 65b is fixed to the mounting member 71, the revolving torque acts as a moment revolving the knuckle arms 10R and 10L abouttheirrevolutional centers (axis of king pin) 10R' and 10L', respectively, in the direction as indicated by the arrowsY3 in FIG. 1. The moment as indicated by the arrows Y3then urges the relay rod 12 for the rear-wheel steeringin the direction as indicated by the arrow Y4. As described hereinabove, however, the disposition of the bearing 81 absorbes the torsion of the coil springs 62R and 62L, thereby preventing a generation of therevolvingtorque in the direction as indicated by the arrows Y2 and preventing action of an urging force asindicated by the arrow Y4 from acting upon the relay rod12.

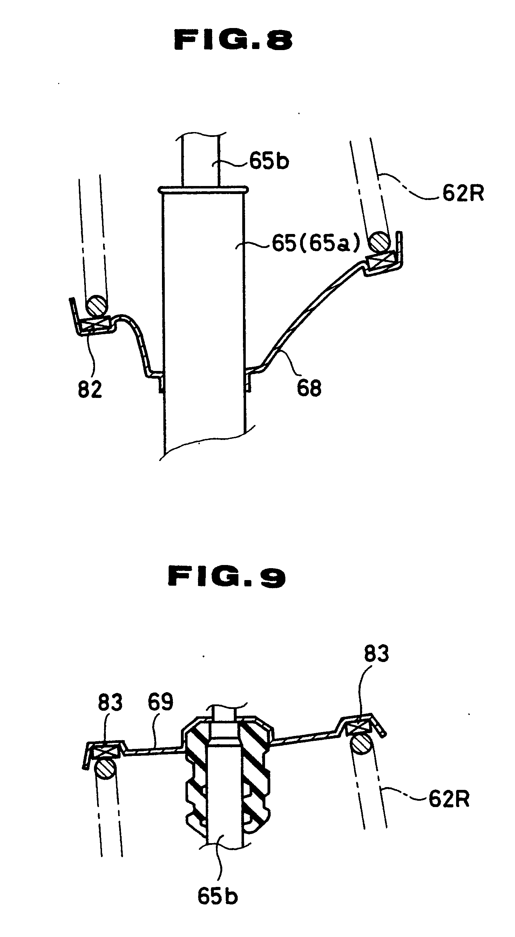

FIGS. 8 to 15 represent other embodiments of the present invention, in which the same elements are provided with the same reference numerals and symbols and duplicate description will be omitted for brevity of explanation.

FIG. 8 indicates an embodiment wherein the spring 62R is brought into abutment with the lower spring seat 68 through a bearing 82, in place of the spring 81 as shown in FIG. 7. In this embodiment, the revolving torque of the spring 62R is absorbed by a relative revolution of its lower end portion relative to the lower spring seat 68 and prevented from being transmitted to the knuckle arm 10R.

FIG.9 indicates an embodiment wherein a bearing 83 is interposed between the upper spring seat 69 and the upper end of the spring 62R. The action of this embodiment is substantially the same as that of FIG. 8.

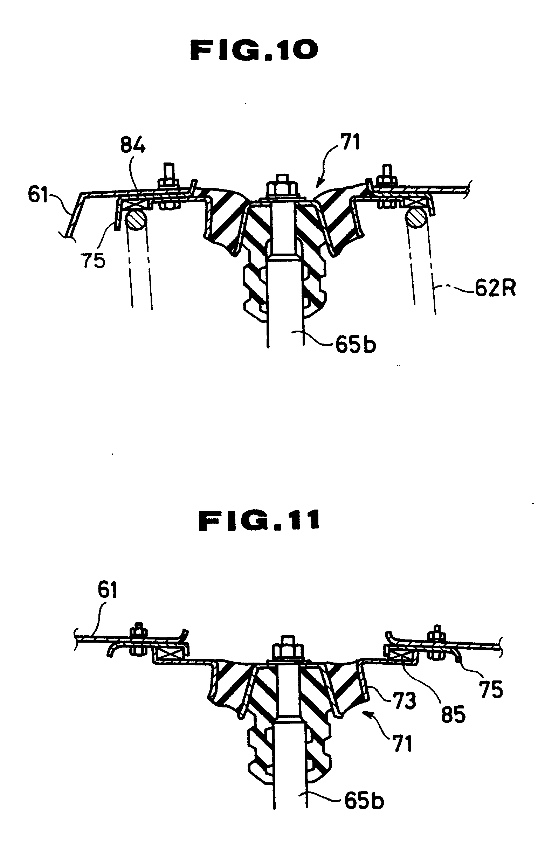

As shown in FIG. 10, the mounting flange 75 in the mounting member 71 is also used as the upper spring seat and a bearing 84 is interposed between the mounting flange 75 and the upper end of the spring 62R.

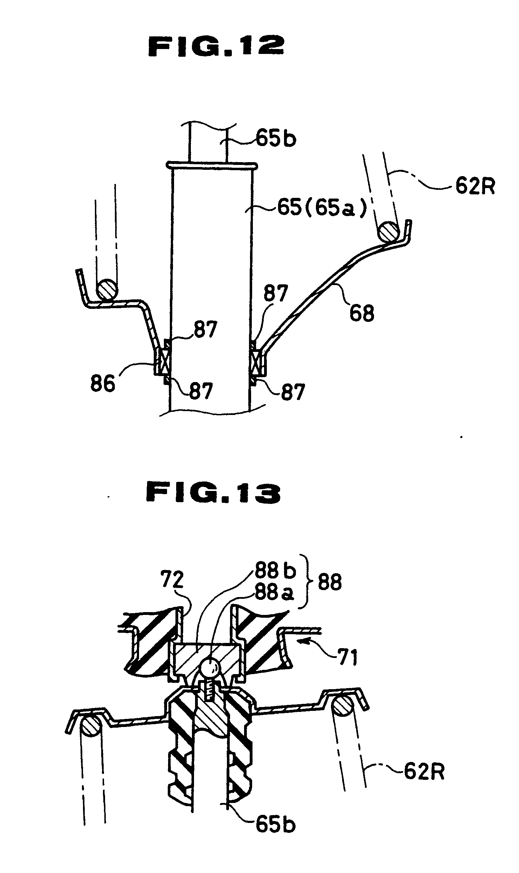

FIG. 11 indicates an embodiment in which the outer ring 73 of the mounting member 71 is connected to the mounting flang 75 through a bearing 85 in such a manner that they can be rotated relative to each other.

Referring to FIG. 12, a bearing 86 is interposed between the lower spring seat 68 and the cylinder 65a of the suspension damper 65. In FIG. 12, reference numeral 87 denotes a ring for fixing the bearing secured to the cylinder 65a.

FIG. 13 shows a variant of FIG. 7, in which a pillow ball 88 is used in place of the bearing 81. More specifically, while a ball 88a is fixed on an upper end of the piston rod 65a while a socket 88b into which the ball 88a is inserted is fixed to the inner ring 72 of the mounting member 71.

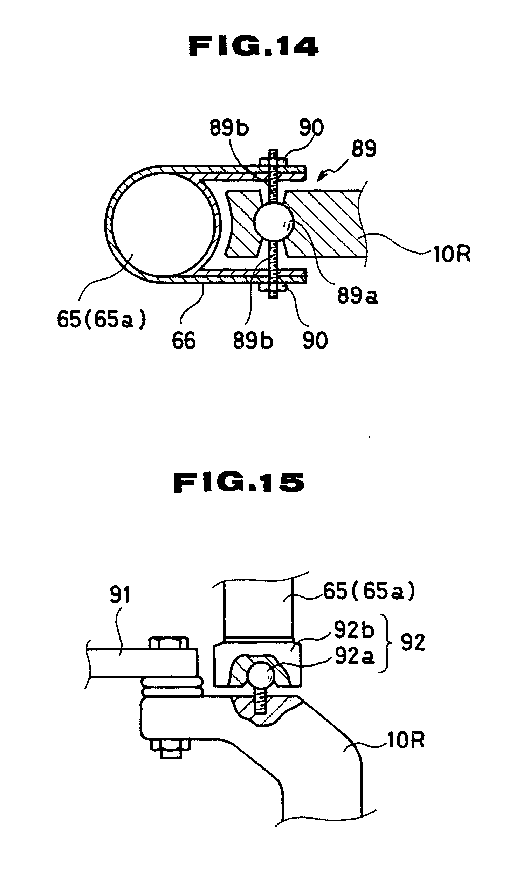

As shown in FIG. 14, a pillow ball 89 is used, in place of a pair of the bolts 66 as shown in FIG. 6, for the mounting bracket 66 fixed to the cylinder 65a of the suspension damper 65. In other words, the knuckle arm 10R serves as a socket holding a ball 89a of the pillow ball 89 and as fixing the mounting bracket 66 through a rod 89b integral with the ball 89a by means of a nut 90.

FIG. 15 indicates a suspension of a double wishbone type, wherein an upper end portion of the knuckle arm 10R is connected to an upper arm 91 supported pivotably by the vehicle body 61, on top of the lower arm 64 as shown in FIG. 6, and wherein the cylinder 65a of the suspension damper 65 is connected to the knuckle arm 10R through a pillow ball 92 which, in turn, comprises a ball 92a fixed to the knuckle arm 10R and a socket 92b fixed to the lower end of the cylinder 65a, in which the ball 92a is fitted.

It is in general that rear-wheel steering vehicles are assembled on the basis of non-rear-wheel steering vehicles. In other words, the rear-wheel steering vehicles are assembled with most parts in common with the non-rear-wheel steering vehicles, such as upper and lower bodies and so on, and with only particular parts replaced by those required for the rear-wheel steering. It has been desired that the largest possible number of parts be used in common between the rear-wheel steering vehicles and the non-rear-wheel steering vehicles. As a matter of course, the same thing can be said of the suspension mechanism for the rear wheels. In this case, it may be considered that the suspension mechanism having the bearing 81 as shown in FIG. 7 be used as it is, too, as a suspension mechanism for the non-rear-wheel steering vehicles. It is not preferred, however, that use of the bearing 81 raises a cost of the suspension mechanism.

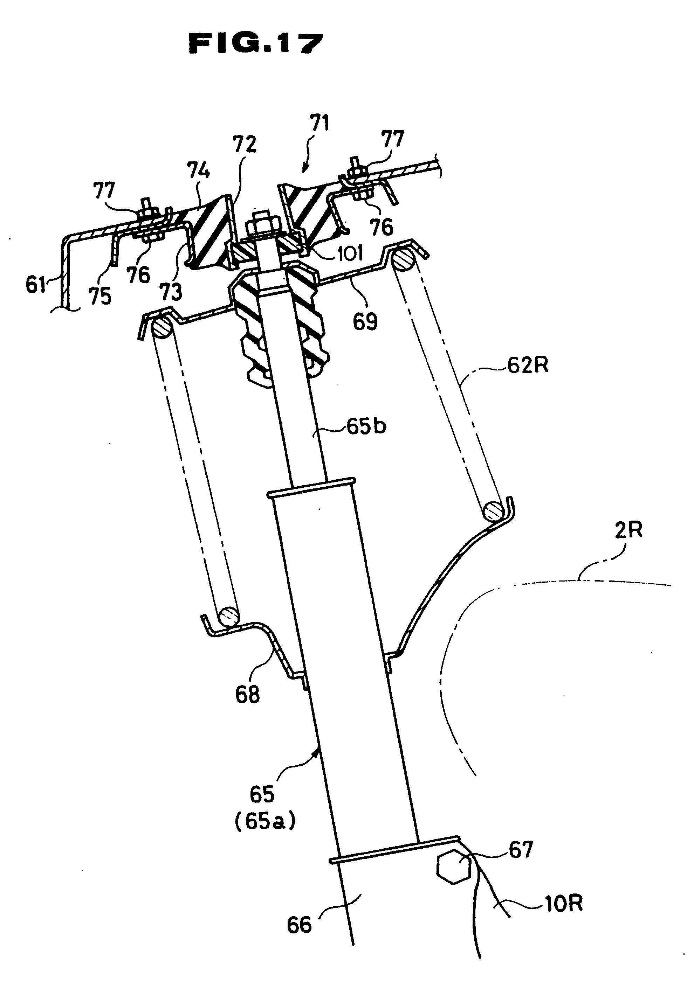

For the vehicles wherein no rear wheels are steered, it is preferred to use a spacer 101 made out of a synthetic resin, as shown in FIG. 17, in place of the bearing 81 as shown in FIG. 7. Therefore, the suspension mechanism with the bearing 81, as shown in FIG. 7, which is used for the rear-wheel steering vehicles, can be used, too, for the non-rear-wheel steering vehicles by simply replacing the bearing 81 by the spacer 101, as shown in FIG. 17. The same thing can be said of the embodiments. In other words, the suspension mechanism may be used for the vehicles wherein the rear wheels are not steered, by replacing the bearing or ball joint 82 (FIG. 8), 83 (FIG. 9), 84 (FIG. 10), 85 (FIG. 11), 86 (FIG. 12), 88 (FIG. 13), 89 (FIG. 14) or 92 (FIG. 15) by a spacer of substantially the same shape as those bearings or ball joints. The terms "spacer of substantially the same shape" are intended herein to means any shape that can maintain a position relationship, as it is, between the two members interconnected to each other by the bearing or ball joint as the torque absorbing means even if the other portion which does not adversely affect such a position relationship may be different.

The present invention may be embodied in other specific forms without departing from the spirit and scope thereof . The present embodiments as described hereinabove are therefore to be considered in all respects as illustrative and not restrictive, the scope of the invention being indicated by the appended claims, and all the changes, modifications and variations which come within the meaning and range of equivalency of the claims are therefore intended to be encompassed within the spirit and scope of the invention.

## Claims

1. A suspension apparatus for a rear-wheel steering vehicle, comprising:
a suspension spring comprising a coil spring (62), interposed between a vehicle body (61) and a rear-wheel supporting member supporting left-hand and right-hand rear wheels (2L, 2R) rotatably, respectively;
a rear-wheel steering mechanism (12, 21) disposed to connect the rear-wheel supporting member for the left-hand rear wheel (2L) to the rear-wheel supporting member for the right-hand rear wheel (2R);
a neutral-position retaining means (12, 13) for urging the left-hand and right-hand rear wheels (2L, 2R) so as to be retained in neutral position, which is connected to the rear-wheel steering mechanism;
a driving means (20, 22, 23) for displacing the rear-wheel steering mechanism (12, 21) in resistance to an urging force of the neutral-position retaining means (12, 13); and
a revolving torque absorbing means (81) for preventing a revolving torque of the suspension spring from being transmitted to the rear-wheel supporting member.

2. A suspension apparatus as claimed in claim 1, wherein the revolving torque absorbing means (81; 82; 83; 84; 85; 86; 88) is interposed between the suspension spring and the vehicle body (61).

3. A suspension apparatus as claimed in claim 1, wherein the revolving torque absorbing means (89; 92) is interposed between the suspension spring and the rear-wheel supporting member.

4. A suspension apparatus as claimed in anyone of claims 1 to 3, wherein the revolving torque absorbing means (81; 82; 83; 84; 85; 86) is a bearing.

5. A suspension apparatus as claimed in anyone of claims 1 to 3, wherein the revolving torque absorbing means is a ball joint (88; 89; 92).

6. A suspension apparatus as claimed in anyone of claims 1 to 5, wherein a shock absorber (65) having a cylinder (65a) and a piston rod (65b) is interposed between the vehicle body (61) and the rear-wheel steering member; and
the suspension spring (62) is disposed so as to wind the shock absorber (65).

7. A suspension apparatus as claimed in claim 6, wherein the cylinder (65a) is mounted with a first spring seat (68) and the piston rod (65b) is mounted with a second spring seat (69); and the suspension spring (62) is interposed between the first spring seat (68) and the second spring seat (69) so as to urge the shock absorber (65) in a direction of expansion.

8. A suspension apparatus as claimed in claim 7, wherein the revolving torque absorbing means (81) is interposed between the shock absorber (65) and the vehicle body (61).

9. A suspension apparatus as claimed in claim 8, wherein the shock absorber is mounted to the vehicle body through a mounting member (71); and the revolving torque absorbing means (81) is interposed between the shock absorber (65) and the vehicle body (61).

10. A suspension apparatus as claimed in claim 8 or 9, wherein the revolving torque absorbing means is a bearing (81).

11. A suspension apparatus as claimed in claim 8 or 9, wherein the revolving torque absorbing means is a ball joint (88).

12. A suspension apparatus as claimed in claim 7, wherein the revolving torque absorbing means (82) is interposed between the first spring seat (68) and the suspension spring (62).

13. A suspension apparatus as claimed in claim 7, wherein the revolving torque absorbing means (83) is interposed between the second spring seat (69) and the suspension spring (62).

14. A suspension apparatus as claimed in claim 7, wherein the revolving torque absorbing means (86) is interposed between the first spring seat (68) and the cylinder (65).

15. A suspension apparatus as claimed in claim 8, wherein the shock absorber is mounted to the vehicle body through a mounting member (71); the mounting member is divided into a first member (73) and a second member (75); and the revolving torque absorbing means (85) is interposed between the first member (73) and the second member (75).

16. A suspension apparatus as claimed in claim 6 or 7, wherein the revolving torque absorbing means (89; 92) is interposed between the shock absorber (65) and the rear-wheel supporting means (10).

17. A suspension apparatus as claimed in claim 6 or 7, wherein the shock absorber (65) is mounted to the vehicle body (61) through a mounting member (71) serving as a spring seat (75, 84) on an end side of the suspension spring (62); and the revolving torque absorbing means (84) is interposed between the mounting member (71) and the suspension spring (62).

18. A suspension apparatus as claimed in anyone of claims 6 to 17, wherein the rear-wheel supporting member is held pivotably in vertical directions with respect to the vehicle body by a lower arm (10) and an upper arm (66), each being disposed separately from the shock absorber (65).

19. A suspension apparatus as claimed in anyone of claims 6 to 17, wherein the rear-wheel supporting member is held pivotably in vertical directions with respect to the vehicle body (61) by a lower arm (10) and the shock absorber (65).

20. A suspension apparatus as claimed in anyone of claims 6 to 19, wherein the shock absorber (65) is disposed so as to be rotatable about its axis, by the revolving torque absorbing means, relative to at least one of the vehicle body (61) and the rear-wheel supporting member (10).

21. A suspension apparatus as claimed in anyone of claims 7 to 20, wherein at least one of the first spring seat (68) and the second spring seat (69) is disposed so as to be rotatable about its axis by the revolving torque absorbing means, relative to the shock absorber (65).

22. A suspension apparatus as claimed in anyone of claims 7 to 21, wherein the cylinder (65a) of the shock absorber (65) is connected to the rear-wheel supporting member side and the piston rod (65b) of the shock absorber (65) is connected to the vehicle body side.

23. A suspension apparatus as claimed in claim 22, wherein the piston rod (65b) is connected to the vehicle body through a mounting member (71); and a bearing (81) is interposed as the revolving torque absorbing means between the mounting member (71) and the piston rod (65b).

24. A suspension apparatus as claimed in anyone of claims 1 to 23, wherein the driving means is an electrically-driven motor (20).

25. A suspension apparatus as claimed in anyone of claims 1 to 24, wherein the driving means is controlled on the basis of a predetermined steering characteristic using a vehicle speed as a parameter.

26. A suspension apparatus as claimed in claim 25, wherein the steering characteristic is set so as to allow the rear wheel (12) to be steered relatively toward the same phase direction when the vehicle speed is faster than when it is slower.

27. A suspension apparatus as claimed in claim 26, wherein the steering characteristic is set so as to allow the rear wheel (12) to be steered to the same phase side from neutral position at time of a high vehicle speed when the vehicle speed is faster than a predetermined vehicle speed and so as to allow the rear wheel (12) to be steered to the reversed phase side from the neutral position when the vehicle speed is slower than the predetermined vehicle speed.

28. A suspension apparatus as claimed in anyone of claims 1 to 27, wherein a source of generating the urging force of the neutral-position retaining means (13) is a compression spring.

29. A suspension apparatus as claimed in claim 28, wherein the compression spring is a coil spring (17) disposed so as to wind the rear-wheel steering mechanism.

30. A suspension apparatus as claimed in anyone of claims 1 to 29, wherein the neutral-position retaining means (13) has:

a casing (15) fixed to the vehicle body (14), through which the rear-wheel steering mechanism passes;

a pair of left-hand and righthand movable spring seats (16a, 16b) disposed in the casing (15) so as to be displaceable along the rear-wheel steering mechanism;

a compression spring (17) disposed in the casing (15) and interposed between the pair of the left-hand and right-hand movable spring seats (16a, 16b); and

a pair of left-hand and right-hand sections (12a, 12b) formed on the rear-wheel steering mechanism, with which the respective left-hand and right-hand movable spring seats (16a, 16b) are abutted.

# FIG.1

FIG.2

# FIG.3

# FIG.4

# FIG.5

# FIG.6

# FIG.7

# FIG.8

65b

62R

65(65a)

82

68

# FIG.9

83

83

69

62R

65b

EP 0 386 776 A1

# FIG.10

84  71
61
75
62R
65b

# FIG.11

61
73
85
75
71
65b

EP 0 386 776 A1

# FIG.12

65b
62R
65(65a)
87
68
87
87
86
87
87

# FIG.13

72
88b
88a
88
71
62R
65b

# FIG.14

89b    90    89

65(65a)    66    89b    90    89a    10R

# FIG.15

91    65(65a)

92b    92
92a

10R

# FIG.16

```
                              ┌─────────┐
                              │  START  │
                              └─────────┘
                                   │
                              ┌─────────┐
                              │ RELEASE │──P1
                              │  BRAKE  │
                              └─────────┘
                                   │
                              ┌─────────┐
                              │ COUPLE  │──P2
                              │ CLUTCH  │
                              └─────────┘
              RETURN ───────────────┤
                              ┌─────────┐
                             /  DATA   /──P3
                            /  INPUT  /
                              └─────────┘
                                   │          P4
                              ◇─────────◇
                YES          /   DID    \
     ┌──────────────────────   BREAKDOWN
     │                        \  OCCUR? /
     │                          ◇─────────◇
     │                             │ NO         P5
     ▼                      ┌──────────────────────┐
┌─────────┐                 │ DETERMING  TARGET     │
│  SHIFT  │──P7             │ STEERED  ANGLE  OF     │
│ CLUTCH  │                 │ REAR WHEEL, ΘR ←       │
└─────────┘                 │ STEERED   ANGLE,       │
     │                      │ VEHICLE  SPEED         │
┌─────────┐                 └──────────────────────┘
│ ENGAGE  │──P8                        │
│  BRAKE  │                 ┌──────────────────────┐
└─────────┘                 │  OUTPUT   ΘR  │──P6
     │          P9          └──────────────────────┘
┌─────────────┐                        │
│ DISCONNECT  │                  ┌─────────┐
│ ELECTRIC    │                  │ RETURN  │
│ SOURCE FOR  │                  └─────────┘
│ DRIVING     │
│ MOTOR       │
└─────────────┘
     │
     ◇─────────◇      P10
NO  /   DID    \
┌── /  GIVEN    \
│   \ TIME PERIOD/
│    \ ELAPSE?  /
│      ◇─────────◇
│         │ YES
│    ┌─────────┐
│    │ COUPLE  │──P11
│    │ CLUTCH  │
│    └─────────┘
│         │
│    ┌─────────┐
│    │   END   │
│    └─────────┘
```

# FIG.17

European Patent
Office

**EUROPEAN SEARCH REPORT**

Application Number

EP 90 10 4512

Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-289039 (MAZDA MOTOR CORPORATION)<br>* column 4, line 54 - column 5, line 37; figures 1-4, 6 *<br>* column 6, lines 28 - 43; claims 4, 11 * | 1, 22, 24-30 | B62D7/14<br>B60G15/07 |
| Y | FR-A-2297150 (RENAULT)<br>* page 1, lines 4 - 24; figures 1, 4 * | 1, 22, 24-30 | |
| A | | 6, 7, 19 | |
| A | EP-A-187970 (FIAT AUTO SPA)<br>* column 1, lines 1 - 58; figures * | 1, 6-9, 11, 19, 20, 22 | |
| A | EP-A-210553 (AUDI AG)<br>* page 7, line 23 - page 8, line 2; figures 1, 3, 4 *<br><br>* page 10, lines 3 - 7 * | 1, 2, 4, 8-10, 15, 19, 20, 22 | |
| A | GB-A-904762 (FORD MOTOR CO LTD)<br>* the whole document * | 1, 3, 5, 18 | TECHNICAL FIELDS SEARCHED (Int. Cl.5 ) |
| A | ATZ AUTOMOBILTECHNISCHE ZEITSCHRIFT.<br>vol. 89, no. 6, June 1987, STUTTGART DE<br>page 307<br>"Der neue BMW 7'"<br>* figure 10 * | 1, 2, 4, 15, 20, 22, 23 | B62D<br>B60G |
| A | DE-A-2538103 (H.EVERTZ ET AL.)<br>* page 2, line 8, paragraph 3 - line 11, paragraph 3; figures 5, 7, 8 * | 1, 2-4 | |
| A | DE-A-2520580 (AUDI NSU AUTO UNION AG)<br>* page 3, lines 25 - 27; figures 1, 5 * | 1, 6, 14, 21, 22 | |
| A | GB-A-2145781 (NIPPON SEIKO KK)<br>* page 1, lines 26 - 34; figure 1 * | 1, 21 | |

-/--

The present search report has been drawn up for all claims

| Place of search | Date of completion of the search | Examiner |
|---|---|---|
| THE HAGUE | 21 JUNE 1990 | PEMBERTON P. |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | IEEE SPECTRUM. vol. 23, no. 10, October 1986, NEW YORK US pages 68 - 72; R.K.JURGEN: "Detroit's 1987 models: new electronic inroads" * page 72, column 1 * | 1, 24-27 | |
| A | PATENT ABSTRACTS OF JAPAN vol. 11, no. 102 (M-576)(2549) 31 March 1987, & JP-A-61 249872 (MAZDA MOTOR CORPORATION) 07 November 1986, * the whole document * | 1, 28-30 | |
| A | EP-A-25744 (AUTOMOBILES DANGEL) * abstract; figures 1, 2 * | 1, 18, 19, 22 | |
| A | DE-A-3136954 (AUDI NSU AUTO UNION AG) * page 6, lines 4 - 6; figure 1 * | 1, 2, 4, 6, 7, 19, 22 | |
| A | DE-B-1259213 (DAIMLER-BENZ AG) * figure * | 1, 18, 22 | TECHNICAL FIELDS SEARCHED (Int. Cl.5 ) |

The present search report has been drawn up for all claims

| Place of search | Date of completion of the search | Examiner |
|---|---|---|
| THE HAGUE | 21 JUNE 1990 | PEMBERTON P. |

EPO FORM 1503 03.82 (P0401)